# EUROPEAN PATENT APPLICATION

(11) **EP 1 530 212 A1**
(43) Date of publication of application: **11.05.2005**
(21) Application number: 04256839.4
(22) Date of filing: 04.11.2004
(51) Int. Cl.: G11B 20/00, G11B 27/32

(54) **Improvements in or relating to the copy protection of optical discs**

(30) Priority: 07.11.2003 GB 0326132
(71) Applicant: Macrovision Europe Limited, Maidenhead, Berkshire SL6 1BR (GB)
(72) Inventor: Selve, Philippe Marcel Henri, Maidenhead Berkshire SL6 1BR (GB); Kovner, Victor, Maidenhead Berkshire SL6 1BR (GB)
(74) Representative: Needle, Jacqueline

(57) **Abstract**

A copy protected optical disc has a first audio session (40) and a second data session (60). The data session (60) has the conventional structure of a Lead-In (LI), a program area (32), and a Lead-Out (LO),and the information in the Lead-In area (LI) of the second session is altered to provide copy protection for the audio content on the disc. For example, the TOC of the second session has had the content at frames N+12, N+13 and N+14 indicated as an audio track by the setting of CONTROL to 0. This is equivalent to providing a pointer (P) which is said to address an audio track but which points to an area of the program area at which there is no audio track. When reading data from an optical disc a user will use an application player (100, 102, 104) to access the optical disc by an appropriate driver (106, 108). Where the information on the disc is interpreted by a CD file system program CDFS.SYS (112) it has been found that the errors incorporated in the Lead-In to the second session prevent drivers provided between a port driver (110) and the player (102) from passing the audio tracks to the player (102).

## Description

The present invention relates to a copy protected optical disc and to a method of controlling access to data on an optical disc.

Digital audio compact discs (CD-DA) which carry music or other audio can be played not only on CD players but can also be played on more sophisticated apparatus, such as CD-ROM drives which can also read the data on the disc. This means, for example, that the data on a CD-DA acquired by a user may be read into a PC by way of its ROM drive and thus copied onto another disc or other recording medium. The increasing availability of recorders able to write to CDs is therefore an enormous threat to the music industry.

WO 00/74053 proposes copy protecting audio data on a digital audio compact disc by rendering control data encoded onto the disc incorrect and/or inaccurate. The incorrect data encoded onto the CD is either inaccessible to, or not generally used by, a CD-DA player. Therefore, a legitimate audio CD bought by a user can be played normally on a compact disc music player. However, the incorrect data renders protected audio data on the CD unplayable by a CD-ROM drive.

However, as the protected audio data is rendered unplayable on a CD-ROM drive, the user is also prevented from using the CD-ROM drive legitimately simply to play the music or other audio on the disc.

It clearly would be advantageous to provide a method of copy protection for optical discs which, whilst preventing the production of usable copy discs, would not prevent or degrade, for example, the playing of legitimate audio discs on all players having the functionality to play audio discs. Examples of such copy protection methods are described in WO 01/61695 and in WO 01/61696.

The present invention seeks to provide alternative copy protection methods.

According to a first aspect of the present invention there is provided a copy protected optical disc carrying information and control data for enabling access to the information, the information being arranged on the disc in two separate and consecutive sessions each having a Lead-In, a program area and a Lead-Out, wherein the first session is an audio session having audio data in its program area, and the second session is a data session having data in its program area, and wherein errors have been introduced into the second session, the errors being arranged to prevent at least some drivers which interpret the information on optical discs from accessing the audio data on the disc.

In a preferred embodiment, the errors are arranged to prevent drivers which are in a computer operating system from accessing the audio data.

Accordingly, embodiments of the invention prevent the use of application players loaded on, or coupled to, a computer from accessing the audio data on the disc. This is effective, therefore, to prevent ripping software accessing the audio data on the disc.

However, and as in WO 00/74053, the invention is capable of preventing users playing the audio data on a CD-DA by using a CD-ROM drive in a personal computer.

In an embodiment, therefore, the data session is provided with the audio data in digital form. The introduced errors can be arranged such that drivers which access the file structure of a data session are not affected by the introduced errors and so such drivers can play the digital audio data.

In a preferred embodiment, the errors are arranged to prevent drivers in a Windows operating system from accessing the audio data. For example, the drivers may be in Windows NT, Windows 2000 or in Windows XP operating systems.

Preferably, the errors are arranged to prevent drivers in a chain of drivers for an application player according to the Windows standard driver mode from accessing the audio data.

In a preferred embodiment, the errors are arranged to prevent a windows system driver, such as a CDROM.SYS driver, from accessing the audio data.

The CDROM.SYS driver is generally provided in the chain of drivers used by applications such as Windows Media Player or iTunes. Many users have these applications loaded onto their computer and ripping software is available for such applications. However, such applications use the CDROM.SYS driver and accordingly, they are prevented from accessing the audio data on an optical disc of the present invention.

In a preferred embodiment, the errors are introduced into the Lead-In of the second session and erroneously identify part of the program area of the second session as an audio track.

Alternatively and/or additionally, the errors are introduced into the Lead-In of the second session and erroneously identify part of the program area of the second session as a second data track.

For example, in selected frames in the TOC alterations may be made to erroneously indicate the existence of two tracks in the second data session. The alterations may comprise altering Pmin values associated with pointers A0 and/or A1.

In a preferred embodiment, in which the existence of an audio track is to be erroneously indicated in the second session, in selected frames of the TOC of the Lead-In the CONTENT is set to 0 to indicate the presence of an audio track in the program area where no such audio track exists.

Additionally and/or alternatively, the existence of a plurality of tracks in the second session and/or the order of audio and data tracks in the second session may be identified in an incorrect manner which does not comply with the standards.

In an additional and/or alternative embodiment, the second session is provided with a first track and at least one additional track, and selected ones of the additional tracks are arranged to be non-compliant with the standards.

For example, a single additional track is provided which is shorter than is required by the standards.

The present invention also extends to a method of controlling access to information on an optical disc, where the optical disc carries information and control data for enabling access to the information, the method comprising arranging the information on the disc in two separate and consecutive sessions each having a Lead-In, a program area, and a Lead-Out, the first session being an audio session having audio data in its program area, and the second session being a data session having data in its program area, and the method further comprising introducing errors into the second session, the errors being arranged to prevent at least some drivers which interpret the information on optical discs from accessing the audio data on the disc.

In a preferred embodiment, the introduced errors are arranged to prevent drivers which are in a computer operating system from accessing the audio data.

The method further comprises providing in the second data session the audio data of the first session in digital form.

In a preferred embodiment, the introduced errors are arranged to prevent drivers which are in a Windows operating system from accessing the audio data. For example, the drivers may be in Windows NT, Windows 2000 or in Windows XP operating systems.

Preferably, the introduced errors are arranged to prevent drivers which are in a chain of drivers for an application player according to the Windows standard driver mode from accessing the audio data.

In a preferred embodiment, the introduced errors are arranged to prevent a windows system driver, for example, a CDROM.SYS driver, from accessing the audio data.

In a preferred embodiment, the method comprises introducing errors into the Lead-In to the second session which erroneously identify part of the program area of the second session as an audio track.

Additionally and/or alternatively, the method comprises introducing errors into the Lead-In of the second session which erroneousiy identify part of the program area of the second session as a second data track.

In an exemplary embodiment, alterations are made to selected frames in the TOC to erroneously indicate the existence of two tracks in the second data session. For example, the errors may be introduced by altering Pmin values associated with pointers A0 and A1.

Preferably, where the introduced errors are to erroneously indicate the existence of an audio track in the second session, the method further comprises setting CONTENT in selected frames of the TOC in the Lead-In to the second session to 0.

Additionally and/or alternatively, the method further comprises incorrectly identifying the existence of a plurality of tracks in the second session and showing the order of the plurality of tracks in a manner which does not comply with the standards.

In an alternative and/or additional embodiment, the method further comprises providing the second session with a first track and at least one additional track, selected ones of the additional tracks being arranged to be non-compliant with the standards.

Preferably, a single additional track is provided and that additional track is made shorter than is required by the standards.

Embodiments of the present invention will hereinafter be described, by way of example, with reference to the accompanying drawings, in which:-
Figure 1 shows schematically a compact disc showing the spiral data track,
Figure 2 shows the structure of a frame of data encoded on a CD,
Figure 3 illustrates the general data format of the Q-subchannel,
Figure 4a shows the format of several modes of the data for the Q-subchannel,
Figure 4b shows the format of the data for the Q-subchannel according to Mode 1,
Figure 5 shows graphically both Atime and Ttime on a compact disc,
Figure 6 shows the encoding of the TOC in the Lead-In area of the second session of a copy protected two session optical disc in accordance with an embodiment of the invention,
Figure 7 shows schematically a two session copy protected optical disc of an embodiment of the invention illustrating the format of the information and control data, and
Figure 8 shows schematically the reading of a multiple session disc by a user application.

A digital audio compact disc (CD-DA), which carries music and is to be played on an audio player such as a conventional CD disc player, is made and recorded to a standard format known as the *Red Book* standards. As well as defining physical properties of the disc, such as its dimensions, and its optical properties, such as the laser wavelength, the *Red Book* also defines the signal format and the data encoding to be used.

As is well known, the *Red Book* standards ensure that any CD-DA produced to those standards will play on any audio player produced to those standards.

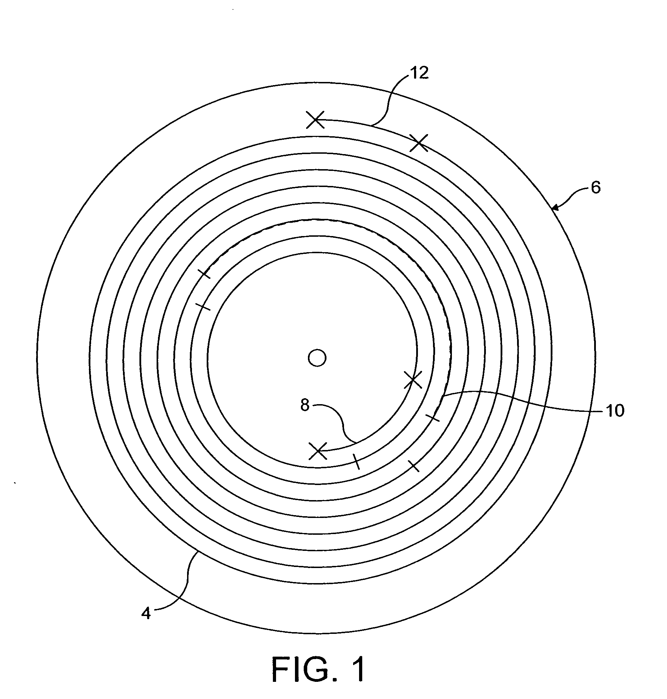

Figure 1 shows schematically the spiral track 4 on a CD 6. This spiral track 4 on a CD-DA is divided into a Lead-In 8 at an inner area of the disc, a number of successive music or audio tracks as 10, and a Lead-Out 12 at an outer area of the disc. The Lead-In track 8 includes a Table of Contents (TOC) which identifies for the audio player the tracks to follow. The Lead-Out 12 gives notice that the track 4 is to end.

An audio player always accesses the Lead-In track 8 on start up. The music tracks may then be played consecutively as the read head follows the track 4 from Lead-In to Lead-Out. Alternatively, the player navigates the read head to the beginning of each audio track as required.

To the naked eye, a CD-ROM looks exactly the same as a CD-DA and has the same spiral track divided into sectors. However, data readers, such as CD-ROM drives, are much more sophisticated than compact disc players and are enabled to read data, and process information, from each sector of the compact disc according to the nature of that data or information. A data reader can navigate by reading information from each sector whereby the read head can be driven to access any appropriate part of the spiral track 4 as required.

To ensure that any data reader can read any CD-ROM, the compact discs and readers are also made to standards known, in this case, as the *Yellow Book* standards. These *Yellow Book* standards incorporate, and extend, the *Red Book* standards. Hence, a data reader, such as a CD-ROM drive, can be controlled to play a CD-DA.

As the data encoding on a CD-DA and on a CD-ROM is well known and in accordance with the appropriate standards, it will only be briefly described herein.

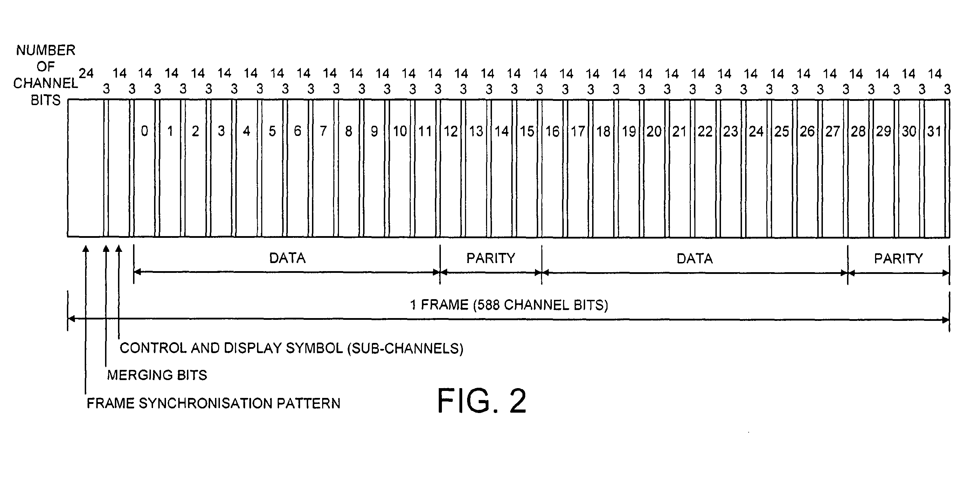

The data on a CD is encoded into frames by EFM (eight to fourteen modulation). Figure 2 shows the format of a frame, and as is apparent therefrom, each frame has sync data, sub-code bits providing control and display symbols, data bits and parity bits. Each frame includes 24 bytes of data, which, for a CD-DA, is audio data.

There are 8 sub-code bits contained in every frame and designated as P, Q, R, S, T, U, V and W. Generally only the P and Q sub-code bits are used in the audio format. The standard requires that 98 of the frames of Figure 2 are grouped into a sector, and the sub-code bits from the 98 frames are collected to form sub-code blocks. That is, each sub-code block is constructed a byte at a time from 98 successive frames. In this way, 8 different subchannels, P to W, are formed. These subchannels contain control data for the disc. The P- and Q- subchannels incorporate timing and navigation data for the tracks on the disc, and generally are the only subchannels utilised on an audio disc.

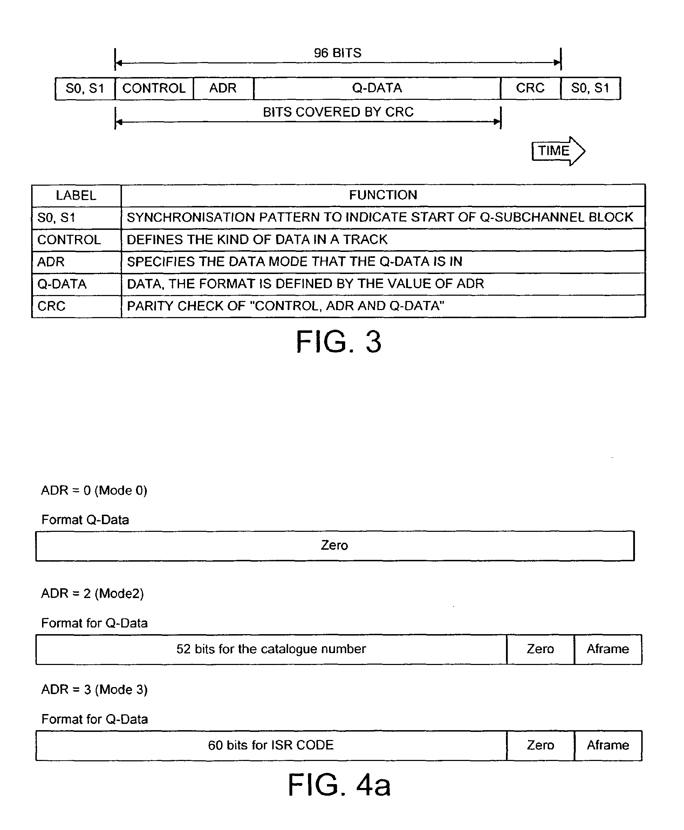

The data format for a Q-subchannel block assembled from 98 successive frames is indicated in Figure 3. As is apparent, the start of the subchannel block is indicated by the appearance of sync patterns S0 and S1 as the first 2 symbols. The next data bits are control bits to define the contents of a track. Thus, the control bits might identify audio content or data content. There then follows address information, ADR, which specifies one of severai modes for the Q-data bits. 72 bits of Q-data succeed the address information, and then there are 16 CRC, or check, bits which are used for error detection on the control, address and Q-data bits.

Figure 4a illustrates the data content of a Q-subchannel block in each of three modes designated by the address information, ADR. In Mode 0, all of the Q-data has a value of zero. In Mode 2, the Q-data comprises a catalogue number for the disc, such as a bar code of the Universal Product Code. In addition, in Mode 2 the Aframe component of the time count from adjacent blocks is continued. Mode 3 is used to give ISR code for identifying each music track. In addition, and as is illustrated, in Mode 3 the absolute time count, Atime, is continued.

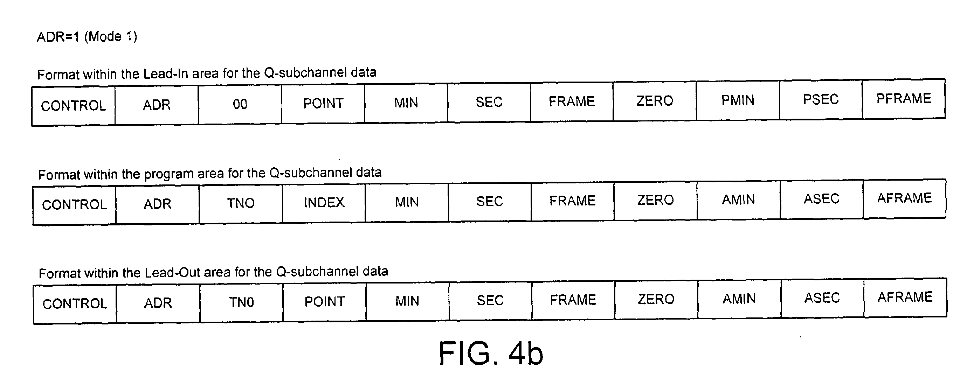

In Mode 1, as illustrated in Figure 4b, the Q-data in each subchannel block contains program and time information for individual audio tracks and for the information area of the disc. As is illustrated, there is a different format for the Q-data for the Lead-In area to that within the program and Lead-Out areas. In the program and Lead-Out areas, the Q-data includes information about the absolute time, Atime, on the disc in minutes, seconds and frames, and Amin, Asec and Aframe are all components of Atime. In Mode 1, the running time of a track is in minutes, seconds and frames as indicated by Min, Sec, Frame.

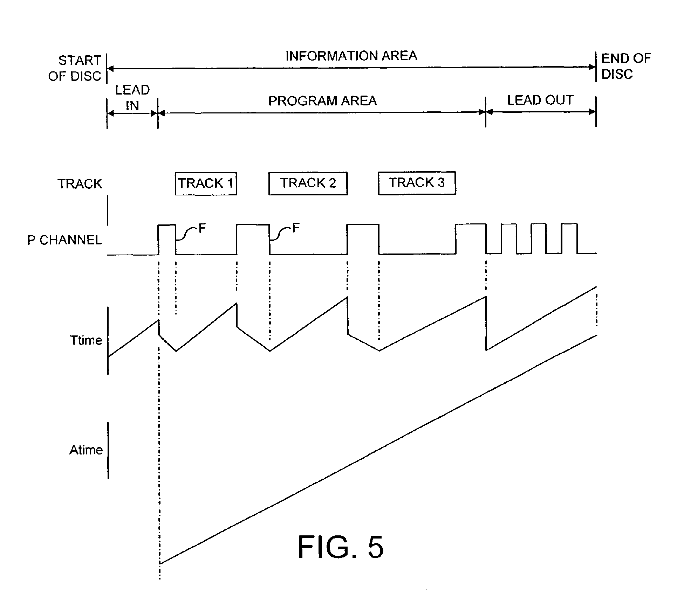

Figure 5 shows graphically how Atime varies across a disc. Atime is the absolute time across the disc and starts at zero at the beginning of the program area. Thus, Atime increases monotonically across the disc. Figure 5 also shows the running time within each track. This is noted as Ttime on Figure 5 and starts at zero at the beginning of each track and increases along each individual track. As is also illustrated in Figure 5, the P-subchannel includes flags F which each indicate the start of a respective track. The P-subchannel flags also designate the Lead-Out area.

The Mode 1 Q-data in the Lead-In area provides the Table of Contents (TOC). In the TOC items are repeated three times in successive Q-subchannel blocks and the complete TOC is continuously repeated during the Lead-In area. Within the Lead-In area for the Q-subchannel data the items Min, Sec, Frame identify the absolute or Atime. When POINT is any value between 01 and 99, Pmin, Psec and Pframe contain the start address of the track pointed to by POINT.

When POINT is set at $A0, Pmin contains the first track number in the program area whilst Psec specifies the session format. As set out below, the session can be an audio session or one of various types of data sessions.

When POINT is set to $A1, Pmin contains the track number of the last track in the program area, and when POINT is set to $A2, Pmin, Psec and Pframe give the start address of the Lead-Out area. As specified above, it is the control bits which identify the nature of the data within the program area. Generally when CONTROL is set to 0 it indicates an audio track.

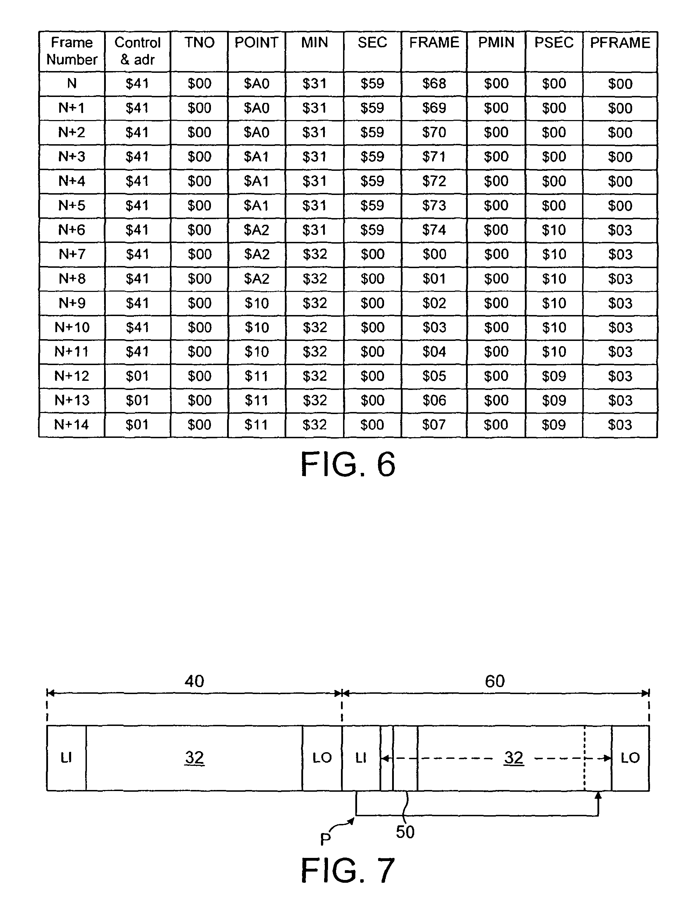

Figure 6 shows an example of the Lead-In for the second session of a multiple session disc which includes incorrect or erroneous information which acts to copy protect the audio content of the disc.

In this respect, the types of data carried on optical discs, and the data formats, have developed since the original CD-DAs were first commercially produced. For example, the information carried by optical discs may now comprise not only audio, numerical, or written data, but video, graphics, programs, computer and other data. Furthermore, optical discs may no longer include just a single information session as shown in Figure 1 in which information extends between a Lead-In 8 and a Lead-Out 12.

Multiple session optical discs were developed, for example, to enable the recording of subsequent information onto recordable optical discs. However, pre-recorded multiple session discs are now available and encoding thereof is according to *Orange Book* standards. In addition, Sony and Philips have issued a standard to which multiple session discs have to comply to ensure compatibility with drives and operating systems. The information given above as to the encoding of the Q-subchannel data is in accordance with the Sony and Philips standard.

In a multiple session format, a plurality of separate sessions are arranged sequentially along the spiral track of the disc from the inner area thereof to the outer area thereof. Each session has a program area, between a respective Lead-In and a respective Lead-Out. Each session may be an audio session or a data session. Each session is provided with appropriate control data and this is generally the same and in the same format as if the session were the only session on the optical disc.

However, to ensure that a data reader is aware of the existence of all of the sessions on the disc, and to ensure that the data reader can navigate all of the sessions, control data from earlier sessions is repeated in subsequent sessions. Thus, the Lead-In to the last session of the disc, contains not only Lead-In control data specific to that session but also Lead-In control data from all of the preceding sessions. Similarly, the Lead-Out of each session may additionally include control data from the Lead-Outs of each preceding session, and the Lead-Out of the last session would then include not only control data specific to that last session but control data from the Lead-Outs of all of the preceding sessions. Alternatively, each Lead-Out may include control data identifying the existence of earlier sessions in addition to the control data specific to that session.

As we have seen above, there are standards as to the structure of the information recorded on optical discs. One such standard is the ISO 9660 standard which sets down the arrangement of information on an optical disc and requires the provision of standard indexes to describe the contents of a data session.

Briefly, the information in the data session or sessions is arranged in files. The interrelationship of each file with other files, and the location and attributes of the files are recorded in directories. These directories are arranged in a hierarchical relationship with a root directory and a plurality of other sub-directories. The files and directories together constitute a volume which additionally includes volume descriptors, directory descriptors and file descriptors. The descriptors contain descriptive information about the corresponding volume, directories and files and also contain information as to the structure of the volume. To enable all of the information in the volume to be accessed, each directory is identified in at least one other directory, and the root directory is identified either in a primary volume descriptor (PVD) or in a supplementary volume descriptor (SVD).

The ISO 9660 standard is well known and need not be further identified herein. Full details of the technically identical ECMA-119 are available at www.ecma.ch.

Figure 7 shows a preferred embodiment of a copy protected multiple session optical disc of the invention which copy protects the audio information on the disc. In the embodiment shown in Figure 7, a copy protected optical disc has just two sessions, namely a first audio session 40 and a second data session 60. The data session 60 has the conventional structure of a Lead-In LI, a program area 32, and a Lead-Out LO. It also has a primary volume descriptor 50 containing control data identifying the files within the data session.

The audio session 40 has a program area 32 extending between the Lead-In LI and the Lead-Out LO. However, as this is an audio session, with the program area containing only audio data, there is no PVD in the program area 32 of the first session 40.

The data in the data session 60 can be made useful for a data player, for example, in that it may include the audio data of the audio session in digital form. This will enable a digital player to access the audio on the disc from the second rather than from the first session.

As indicated above, the information in the Lead-In area LI of the second session is altered to provide copy protection for the audio content on the disc. Specifically, the erroneous data is arranged to prevent ripping software accessing the audio data on the disc.

As indicated in Figure 6, the TOC of the second session has had the content at frames N+12, N+13 and N+14 indicated as an audio track by the setting of CONTROL to 0. However, no such audio track is provided within the program area of the second session 60. The alteration made to the control data in Figure 6, therefore, is equivalent to the provision of the pointer P, as illustrated in Figure 7, in the Lead-In which is said to address an audio track but which points to an area of the program area at which there is no audio track.

The TOC has also been altered to indicate that the second data session includes more than the single data track which is actually provided. In this respect, and as can be seen at frames N and N+3 of Figure 6 the POINT A1 has a higher associated value of Pmin than the POINT A0 indicating the existence of a second track.

It has been found that the provision of such erroneous data prevents ripping software not only from accessing the non-existent audio track but from also seeing the other audio tracks on the disc. In this way, the audio information on the disc is protected against the ripping software.

As described, the erroneous information addresses a non-existent audio track in order to provide errors which prevent ripping software accessing the audio information on the disc. However, if preferred, the erroneous data could address a non-existent second data track.

Additionally and/or alternatively the second data session 60 may be provided with a first data track and with one or more additional tracks which may be data or audio tracks. The or each additional track is addressed by the information in the Lead-In area LI of the second session, for example, a pointer, as pointer P, may address such an additional track. In this embodiment, copy protection for the audio content on the disc is provided by making selected ones of, or all of, the additional tracks non-compliant with the standards.

The nature of the non-compliance of the additional track or tracks may be chosen as required. For example, the length of the additional track or track, that is, the time thereof, may be outside the time requirements in the standards. In an embodiment, the or each additional track is shorter than the standard requires.

It has been determined that the provision of a non-compliant additional track or tracks in the second session can prevent some applications from accessing the first, audio session.

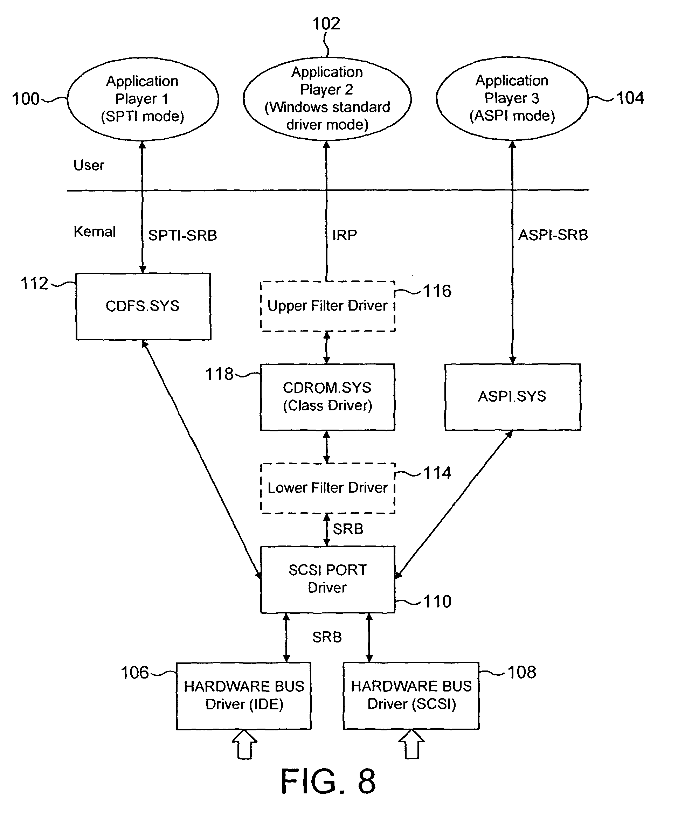

Figure 8 shows schematically the reading of data from an optical disc using a computer. In this respect, the user will use an application such as one of three application players 100, 102, and 104, to access the optical disc by way of an appropriate one of two drivers 106 and 108. In this respect, in the arrangement shown in Figure 8, the driver 106 utilises an IDE interface to access the disc whereas the driver 108 utilises a SCSI interface. The information retrieved by either driver 106, 108 from the disc is interpreted by elements of the computer's operating system using the programs generally shown in Figure 8. In this respect, the programs illustrated in Figure 8 are conventionally provided in operating systems such as Windows NT version 4 and higher, Windows 2000, and Windows XP.

It will be seen from Figure 8 that the information retrieved from a compact disc drive (not shown) by way of the driver 106 or 108 is passed by way of a port driver 110 along one of three possible paths dependent upon the application player to be utilised. Thus, where the application player 100 is used to access the disc, the information is interpreted by a CD file system program CDFS.SYS 112 which can access the files in the data session 60. Where those files contain the audio from the disc in digital format, the player 100 is enabled to play the audio on the disc. However, such a player cannot access the audio session 40.

The application player 102 utilises, as shown, Windows standard driver mode and ripping software for use in conjunction with such players is readily available. However, it has been found that the errors incorporated in the Lead-In to the second session, and/or the presence of non-compliant tracks in the second session, prevent drivers provided between the port driver 110 and the player 102 from passing the audio tracks to the player 102. In this respect, it will be appreciated that if the player 102 cannot access the audio tracks, it cannot copy them.

It will be seen in Figure 8 that there are optional filter drivers 114 and 116 in the path from the port driver 110 to the player 102. In addition, there is a generic driver 118 which runs CDROM.SYS.

The driver 118 interprets the data on the disc received from drivers as 110 and 114 and, according to convention, it will read the TOC of the second session first. it has been found that the provision of the pointer P to non-existent audio tracks and/or the provision of non-complaint tracks causes CDROM.SYS to ignore all of the audio tracks on the disc.

It will be appreciated that errors other than those described above may additionally or alternatively be incorporated in the TOC of the second session in order to prevent access by a player such as 102 to the audio data on the disc.

The Sony and Philips standard requires, for example, that the first track in a data session be a data track and that, within a data session an audio track cannot be followed by a data track. If the second session, and/or the TOC of the second session is altered such that these rules are breached, CDROM.SYS will be unable to reconcile the data on the disc and again will be prevented from having access to the audio on the disc.

It will be appreciated that modifications to and amendments of the embodiments as described and claimed may be made within the scope of this application.

## Claims

1. A copy protected optical disc carrying information and control data for enabling access to the information, the information being arranged on the disc in two separate and consecutive sessions each having a Lead-In, a program area and a Lead-Out, wherein the first session is an audio session having audio data in its program area, and the second session is a data session having data in its program area, and wherein errors have been introduced into the second session, the errors being arranged to prevent at least some drivers which interpret the information on optical discs from accessing the audio data on the disc.

2. A copy protected optical disc as claimed in Claim 1, wherein the errors are arranged to prevent drivers which are in a computer operating system from accessing said audio data.

3. A copy protected optical disc as claimed in Claim 2, wherein the errors prevent the use of application players loaded on, or coupled to, a computer from accessing said audio data on the disc.

4. A copy protected optical disc as claimed in any preceding claim, wherein the data session is provided with said audio data in digital form.

5. A copy protected optical disc as claimed in Claim 4, wherein the introduced errors are arranged such that drivers which access the file structure of a data session are not affected by the introduced errors and so such drivers can play the digital audio data.

6. A copy protected optical disc as claimed in any preceding claim, wherein the errors are arranged to prevent drivers in a Windows operating system from accessing said audio data.

7. A copy protected optical disc as claimed in Claim 6, wherein the drivers prevented from accessing said audio data are drivers in Windows NT, Windows 2000 or Windows XP operating systems.

8. A copy protected optical disc as claimed in any preceding claim, wherein the errors are arranged to prevent drivers in a chain of drivers for an application player according to the Windows standard driver mode from accessing said audio data.

9. A copy protected optical disc as claimed in Claim 8, wherein the errors are arranged to prevent a windows system driver from accessing said audio data.

10. A copy protected optical disc as claimed in any preceding claim, wherein the errors are introduced into the Lead-In of the second session and erroneously identify part of the program area of the second session as an audio track.

11. A copy protected optical disc as claimed in any preceding claim, wherein the errors are introduced into the Lead-In of the second session and erroneously identify part of the program area of the second session as a second data track.

12. A copy protected optical disc as claimed in Claim 10 or Claim 11, wherein in selected frames in the Table of Contents (TOC) in the Lead-In of the second session alterations are made to erroneously indicate the existence of two tracks in the second data session.

13. A copy protected optical disc as claimed in Claim 12, wherein the alterations comprise altering Pmin values associated with pointers A0 and/or A1.

14. A copy protected optical disc as claimed in Claim 12 or Claim 13, in which the existence of an audio track is to be erroneously indicated in the second session wherein, in selected frames of the TOC of the Lead-In the CONTENT is set to 0 to indicate the presence of an audio track in the program area where no such audio track exists.

15. A copy protected optical disc as claimed in any preceding claim, wherein the existence of a plurality of tracks in the second session and/or the order of audio and data tracks in the second session may be identified in an incorrect manner which does not comply with the standards.

16. A copy protected optical disc as claimed in any preceding claim, wherein the second session is provided with a first track and at least one additional track, and wherein selected ones of the additional tracks are arranged to be non-compliant with the standards.

17. A copy protected optical disc as claimed in Claim 16, in which a single additional track is provided which is shorter than is required by the standards.

18. A method of controlling access to information on an optical disc, where the optical disc carries information and control data for enabling access to the information, the method comprising arranging the information on the disc in two separate and consecutive sessions each having a Lead-In, a program area, and a Lead-Out, the first session being an audio session having audio data in its program area, and the second session being a data session having data in its program area, and the method further comprising introducing errors into the second session, the errors being arranged to prevent at least some drivers which interpret the information on optical discs from accessing the audio data on the disc.

19. A method of controlling access to information on an optical disc as claimed in Claim 18, wherein the introduced errors are arranged to prevent drivers which are in a computer operating system from accessing said audio data.

20. A method of controlling access to the information on an optical disc as claimed in Claim 18 or Claim 19, the method further comprising providing in the second data session the audio data of the first session in digital form.

21. A method of controlling access to information on an optical disc as claimed in any of Claims 18 to 20, wherein the introduced errors are arranged to prevent drivers which are in a Windows operating system from accessing said audio data.

22. A method of controlling access to information on an optical disc as claimed in Claim 21, wherein said drivers are in Windows NT, Windows 2000 or Windows XP operating systems.

23. A method of controlling access to information on an optical disc as claimed in any of Claims 18 to 22, wherein the introduced errors are arranged to prevent drivers which are in a chain of drivers for an application player according to the Windows standard driver mode from accessing the audio data.

24. A method of controlling access to information on an optical disc as claimed in Claim 19, wherein the introduced errors are arranged to prevent a windows system driver from accessing the audio data.

25. A method of controlling access to information on an optical disc as claimed in any of Claims 18 to 24, further comprising introducing errors into the Lead-In to the second session which erroneously identify part of the program area of the second session as an audio track.

26. A method of controlling access to information on an optical disc as claimed in any of Claims 18 to 25, further comprising introducing errors into the Lead-In of the second session which erroneously identify part of the program area of the second session as a second data track.

27. A method of controlling access to information on an optical disc as claimed in Claim 25 or Claim 26, further comprising altering selected frames in the Table of Contents (TOC) in the Lead-In to the second session to erroneously indicate the existence of two tracks in the second data session.

28. A method of controlling access to information on an optical disc as claimed in Claim 27, comprising introducing the errors by altering Pmin values associated with pointers A0 and A1.

29. A method of controlling access to information on an optical disc as claimed in Claim 27 or Claim 28, where the introduced errors are to erroneously indicate the existence of an audio track in the second session, and the method further comprising setting CONTENT in selected frames of the TOC in the Lead-In to the second session to 0.

30. A method of controlling access to information on an optical disc as claimed in any of Claims 18 to 29, further comprising incorrectly identifying the existence of a plurality of tracks in the second session and showing the order of the plurality of tracks in a manner which does not comply with the standards.

31. A method of controlling access to information on an optical disc as claimed in any of Claims 18 to 30, further comprising providing the second session with a first track and at least one additional track, selected ones of the additional tracks being arranged to be non-compliant with the standards.

32. A method of controlling access to information on an optical disc as claimed in Claim 31, further comprising providing a single additional track and making the additional track shorter than is required by the standards.
